# FASCICULE DE BREVET EUROPEEN

(11) **EP 3 054 629 B1**
(45) Date de publication et mention de la délivrance du brevet: **05.06.2019**
(21) Numéro de dépôt: 16157924.8
(22) Date de dépôt: 28.07.2006
(51) Int. Cl.: H04L 12/28

(54) **PROCÉDÉ DE CONTRÔLE D'UN ÉQUIPEMENT MULTIMÉDIA À PARTIR D'UN TERMINAL MOBILE, PROGRAMMES D'ORDINATEUR, ÉQUIPEMENT MULTIMÉDIA ET SERVEUR CORRESPONDANTS**
KONTROLLVERFAHREN EINER MULTIMEDIA-AUSSTATTUNG VON EINEM MOBILEN ENDGERÄT AUS, ENTSPRECHENDES COMPUTERPROGRAMM, ENTSPRECHENDE MULTIMEDIA-AUSSTATTUNG UND ENTSPRECHENDER SERVER
METHOD FOR CONTROLLING A MULTIMEDIA DEVICE FROM A MOBILE TERMINAL, CORRESPONDING COMPUTER PROGRAM, MULTIMEDIA DEVICE AND SERVER

(30) Priorité: 05.08.2005 FR 0508408
(43) Date de publication de la demande: 10.08.2016
(62) Demande divisionnaire de: 06778062.7
(73) Titulaire: Orange, 75015 Paris (FR)
(72) Inventeur: GRIMAULT, Patrick, 14120 MONDEVILLE (FR); NORMAND, Olivier, 44770 Prefailles (FR); VONGPHOUTHONE, Aline, LONDON, NW53AN (GB)

(56) Documents cités:
- WO-A-01/47248
- WO-A-02/05118
- WO-A-02/097584
- US-A1- 2004 175 096
- "Overview of UPnP AV Architecture", DEVELOPMENT AND RESEARCH AT INTEL, 2 juillet 2003 (2003-07-02), XP002304266,

## Description

### 1. Domaine de l'invention

Le domaine de l'invention est celui de l'accès, à distance et/ou en local, et du contrôle d'équipements multimédias depuis un terminal mobile. Plus précisément, l'invention concerne les équipements multimédias (tels que par exemple un baladeur MP3, un enregistreur de DVD, un terminal numérique (du type Set Top Box),...) de restitution et/ou de stockage de contenus multimédias de format spécifique (par exemple de type MP3, AVI, MPEG, JPEG,...), connectés à un réseau de communication (par exemple de type Internet), via une liaison directe (par exemple via une liaison haut débit de type ADSL ou UMTS) ou indirecte (par exemple via une passerelle résidentielle de type LiveBox (marque déposée), Freebox (marque déposée),...).

Plus précisément encore, l'invention concerne une technique de contrôle de tels équipements à partir d'un terminal de communication sans fil (par exemple de type mobile GSM, GPRS, UMTS, ordinateur portable,...).

### 2. Solutions et inconvénients de l'art antérieur

De façon générale, la restitution effective du(des) contenu(s) multimédia(s) d'un équipement multimédia est assurée, par exemple, par une télévision, une chaîne HiFi ou encore un Home Cinéma.

Classiquement, dans le cas d'une commande locale d'un équipement de restitution et/ou de stockage de contenus multimédias, le pilotage d'un tel équipement s'effectue au moyen d'une télécommande spécifique à l'équipement. Généralement, une telle télécommande utilise l'infrarouge comme canal de transmission.

Aujourd'hui, l'accès en situation de mobilité représente une demande forte des usagers, en particulier pour le téléchargement ou l'échange de fichiers, par exemple de type audio au format MP3, entre un terminal mobile et un équipement de stockage de données, par exemple, du type ordinateur personnel (PC pour « Personal Computer » en anglais).

On connaît, dans l'état de la technique, deux méthodes d'accès sans fil permettant à un terminal mobile de se connecter et de communiquer avec un ordinateur personnel (PC) jouant le rôle d'équipement multimédia, via une liaison radio.

Il est à noter qu'à la connaissance des inventeurs, il n'a jamais été envisagé de mettre en oeuvre les deux techniques connues présentées ci-après pour un équipement multimédia dédié (par exemple un lecteur DVD de salon).

L'accès par « liaison sans fil de proximité » (aussi appelé par la suite « mode télécommande mobile simple ») est une première méthode selon laquelle le terminal mobile et l'ordinateur personnel (PC) sont chacun équipé d'un module de communication dédié, par exemple de type Bluetooth (cette norme est également connue sous le nom IEEE 802.15), WiFi (« Wireless Fidelity » en anglais, cette norme est également connue sous le nom IEEE 802.11), etc. Cette première méthode permet à un terminal mobile de dialoguer directement en local avec un ordinateur personnel (PC). Elle permet en outre à un usager d'utiliser son terminal mobile, à la manière d'une télécommande, pour commander des applications s'exécutant sur un ordinateur personnel (PC). À titre d'exemple, une télécommande Bluetooth permettant la commande de la lecture de fichiers musicaux stockés sur un ordinateur personnel (PC), peut être mise en oeuvre par un assistant personnel numérique (PDA pour « Personal Digital Assistant » en anglais) équipé d'un module de communication Bluetooth et sur lequel est installé un logiciel de contrôle Bemused (marque déposée), exécutable par un système d'exploitation Symbian (marque déposée) embarqué sur le PDA. Dans cet exemple, les commandes du PDA sont transmises vers le PC via une liaison sans fil selon un protocole de communication radio au standard Bluetooth.

L'accès par « liaison numérique à débit asymétrique » (ADSL pour « Asymmetric Digital Subscriber Line » en anglais) est une seconde méthode selon laquelle le terminal mobile et l'ordinateur personnel (PC) mettent en oeuvre une technologie de communication haut débit permettant d'utiliser les lignes téléphoniques déjà existantes afin de dialoguer l'un avec l'autre via Internet. Pour ce faire, un client logiciel spécifique est implémenté dans le terminal mobile et un logiciel spécifique (serveur) dans l'ordinateur personnel (PC). À titre d'exemple, le logiciel « peer to peer » (Ipra*cool (marque déposée)) de « télé-partage d'applications » d'Ipracom (marque déposée), permet aux usagers d'accéder à distance à des fichiers contenus dans un PC, depuis leurs « smartphones » ou leurs PDA. Il est bien connu de l'art antérieur que les équipements multimédias mettant en oeuvre ce type de technologie Internet doivent être connectés directement ou indirectement (c'est-à-dire via une passerelle résidentielle) à Internet.

Actuellement, de plus en plus de constructeurs d'équipements multimédias prévoient une connectivité IP sur chacun de leurs équipements (à la manière par exemple des appareils de la compagnie danoise KISS Technologies (marque déposée)), de façon à permettre une connexion directe à Internet, par exemple, via une liaison ADSL/IP.

Bien que ces méthodes d'accès aient représenté un progrès important dans le mécanisme de contrôle d'équipements multimédias à partir d'appareils de communication sans fil, ces techniques connues présentent néanmoins les désavantages de limiter l'interface homme/machine et les services offerts par l'équipement multimédia à partir des appareils de communication sans fil.

En effet, comme déjà indiqué, dans les deux techniques de l'art antérieur un logiciel léger est embarqué sur l'équipement multimédia pour recevoir et interpréter les ordres de base transmis par le terminal mobile (par exemple du type "play", "stop", ...). Un tel logiciel ne permet pas à l'équipement multimédia de proposer à l'utilisateur des services riches et élaborés (par exemple association de musiques à des paroles, etc).

Pour remédier à ce problème, une solution consisterait à implémenter un serveur de gestion et de présentation de contenus dans l'équipement multimédia. Cependant, elle présente un certain nombre d'inconvénients.

L'inconvénient majeur de cette solution réside dans le fait que l'hébergement d'un logiciel de traitement plus conséquent (c'est-à-dire coûteux en termes de mémoire) et plus complexe de type serveur augmente substantiellement le coût de l'équipement multimédia, au risque de le faire sortir du champ du très grand public.

Par ailleurs, quel que soit le type d'usage, proche (mode télécommande mobile simple) ou distant (technologie Internet) de l'équipement multimédia, les menus d'usage de l'équipement multimédia sont statiques (car ils résident dans l'équipement multimédia). En d'autres termes, il n'y a pas d'interaction de ces menus avec le monde extérieur. À titre d'exemple, on ne peut pas afficher sur l'écran du terminal mobile une page de dialogue (par exemple au format WML, XHTML, HTML,...) présentant à la fois des fichiers musicaux localisés sur l'équipement multimédia et des fichiers musicaux du même auteur offerts à l'achat par un opérateur de service. De la même façon, on ne peut pas publier sur ce type de page des offres promotionnelles évoluant quotidiennement ou tout autre service à valeur ajoutée proposé par l'opérateur. Ce type de service présente pourtant un grand intérêt, tant du point de vue de l'utilisateur que de l'opérateur de services.

En outre, cette solution n'est pas adaptée à la lecture de contenus multimédias en mode streaming ou de téléchargement, depuis tout terminal mobile. En effet, l'équipement multimédia ne peut pas s'adapter aux contraintes des différents types de terminaux mobiles (c'est-à-dire aux protocoles de streaming et de codage des différents terminaux) et de réseaux d'accès. Encore une fois, si l'équipement multimédia accomplissait cette fonction, cela serait au prix de l'hébergement d'un serveur de streaming complet conduisant à une complexité et un coût incompatibles avec un équipement grand public.

Le document de brevet WO 02/05118 décrit une technique permettant à un utilisateur de faire passer un ordre par un portail central pour commander un dispositif sur un "Site Client".

### 3. Objectifs de l'invention

L'invention a notamment pour objectif de pallier ces inconvénients de l'art antérieur. Plus précisément, un objectif de l'invention est de fournir une technique de contrôle d'équipement multimédia, depuis tout terminal mobile, qui soit simple à mettre en oeuvre, sans devoir embarquer sur l'équipement multimédia un serveur de gestion complexe et coûteux, notamment en terme de mémoire.

Un autre objectif de l'invention est de proposer une telle technique qui, dans un mode de réalisation particulier, soit notamment bien adaptée aux opérateurs de services souhaitant modifier régulièrement l'interface utilisateur de l'équipement multimédia pour accrocher des services à valeur ajoutée (par exemple des publicités, des propositions d'achats, ...).

Un autre objectif de l'invention est de proposer une telle technique qui, dans un mode de réalisation particulier, permette de fournir l'accès en mode streaming à des contenus multimédias, quel que soit le type du terminal mobile et le réseau d'accès utilisés, sans devoir héberger dans l'équipement multimédia un serveur de transcodage et de streaming coûteux.

Encore un autre objectif de l'invention est de proposer une telle technique qui permette une meilleure sécurisation de l'accès à un équipement multimédia.

L'invention a encore pour objectif de fournir une telle technique qui, dans un mode de réalisation particulier, permette à un terminal mobile d'afficher à l'identique un service, quel que soit le type d'usage, proche ou distant de l'équipement multimédia.

L'invention a également pour objectif de fournir une telle technique qui, dans un mode de réalisation, soit peu coûteuse et compatible avec tous les équipements multimédias de restitution et/ou de stockage de contenus multimédias grand public.

L'invention a en outre pour objectif de fournir une telle technique qui, dans un mode de réalisation, permette à un utilisateur d'accéder à toute ou partie du contenu d'un équipement multimédia, lorsque ce dernier est déconnecté du réseau de communication ou hors tension.

### 4. Exposé de l'invention

Ces objectifs, ainsi que d'autres qui apparaîtront par la suite, sont atteints à l'aide d'un procédé de contrôle par un terminal mobile d'un équipement multimédia de restitution et/ou de stockage de contenus multimédias selon la revendication 1.

Ainsi, l'invention repose sur une approche tout à fait nouvelle et inventive du contrôle d'un équipement multimédia. En effet, toute l'intelligence et la logique de contrôle sont déportées au niveau du serveur distant et du réseau d'accès, ce qui rend l'invention exploitable pour n'importe quel type de terminal mobile et d'équipement multimédia, ces derniers ne nécessitant donc aucune adaptation complexe et coûteuse pour être compatibles avec le procédé selon l'invention, ce qui est particulièrement intéressant.

Dans un mode de réalisation préférentiel de l'invention, le procédé comprend en outre l'étape suivante : le serveur distant enrichit les données multimédias transformées avec des données supplémentaires, de façon à transmettre au terminal mobile des données enrichies.

Selon un aspect avantageux de l'invention, le procédé met en oeuvre :
- un premier mécanisme d'authentification, permettant au serveur distant d'authentifier le terminal mobile et comprenant les étapes suivantes :
   ∘ un réseau d'accès, via lequel le terminal mobile est connecté au réseau de communication, certifie un identifiant du terminal mobile ;
   ∘ le serveur distant reçoit l'identifiant du terminal mobile certifié par le réseau d'accès ;
- un second mécanisme d'authentification, permettant à l'équipement multimédia d'authentifier le serveur distant et comprenant les étapes suivantes :
   ∘ le serveur distant maintient une table qui associe à chaque identifiant de terminal mobile, un identifiant d'un équipement multimédia, une adresse à laquelle l'équipement multimédia peut être joint au sein du réseau de communication et une clé d'accès à l'équipement multimédia ;
   ∘ à partir de l'identifiant du terminal mobile certifié par le réseau d'accès, le serveur distant retrouve dans la table l'adresse et la clé d'accès, se connecte à l'équipement multimédia grâce à l'adresse et met en oeuvre un processus d'authentification basé sur la clé d'accès.

Avantageusement, les échanges entre le terminal mobile et le serveur distant sont mis en oeuvre par un navigateur de pages, compris dans le terminal mobile, et un serveur de pages, compris dans le serveur distant.

De façon préférentielle, les échanges entre le serveur distant et l'équipement multimédia sont mis en oeuvre par un serveur applicatif, compris dans le serveur distant, et un module de traitement de requêtes et de transfert de données, compris dans l'équipement multimédia.

L'invention concerne également un produit programme d'ordinateur téléchargeable depuis un réseau de communication et/ou enregistré sur un support lisible par ordinateur et/ou exécutable par un processeur comprenant des instructions de code de programme pour l'exécution par un serveur distant selon la revendication 9.

L'invention concerne en outre un produit programme d'ordinateur téléchargeable depuis un réseau de communication et/ou enregistré sur un support lisible par ordinateur et/ou exécutable par un processeur comprenant des instructions de code de programme pour l'exécution par un équipement multimédia selon la revendication 10.

L'invention concerne aussi un équipement multimédia selon la revendication 11.

L'invention concerne encore un serveur selon la revendication 12.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre le principe général du procédé selon l'invention ;
- la figure 2 illustre un premier mode de réalisation particulier de l'invention, dans le cas d'un contrôle à distance d'un équipement multimédia ;
- la figure 3 illustre un second mode de réalisation particulier de l'invention, dans le cas d'un contrôle en local d'un équipement multimédia ;
- la figure 4 présente la structure d'un mode de réalisation particulier d'un équipement multimédia selon l'invention ; et
- la figure 5 présente la structure d'un mode de réalisation particulier d'un serveur de gestion selon l'invention.

### 6. Description détaillée de l'invention

Par souci de simplification de la description, on se limitera, dans toute la suite de ce document, à décrire le cas particulier d'un contrôle d'un équipement multimédia localisé au domicile d'un utilisateur et connecté à Internet via une liaison haut débit domestique de type ADSL (par exemple via une passerelle résidentielle du type LiveBox (marque déposée)), depuis un smartphone (GPRS, Edge, UMTS,...) disposant d'un module léger d'interface utilisateur, tel que par exemple, un browser de pages (aussi appelé par la suite « browser ») (les pages sont par exemple au format WML, XHTML, HTML,...). L'Homme du Métier étendra sans difficulté cet enseignement à un terminal mobile de toute autre nature (par exemple un ordinateur portable, un PDA,...) et équipé de tout autre logiciel client léger, ainsi qu'à un équipement multimédia localisé dans un autre lieu (par exemple dans une voiture, dans une salle de réunion,...) et connecté à Internet via un autre type de connexion (filaire, radio terrestre, réseau satellitaire, ou autres...).

Comme on le notera sur toutes les figures du présent document les éléments et étapes identiques sont désignés par une même référence numérique.

Par souci de clarté, dans toutes les figures du présent document les moyens sont référencés par des références numériques (du type 1, 2, 3,...) et les étapes de procédé sont référencées par des références alphanumériques (du type E1, E2, E3,...).

### 6.1 Principe général de l'invention

Le principe général de l'invention repose sur une technique de traitement déporté de demandes d'un terminal mobile, visant à fournir des requêtes, utilisées pour contrôler des fonctionnalités d'un équipement multimédia.

La technique de traitement déporté de demandes d'un terminal mobile selon l'invention peut notamment faire restituer sur le terminal mobile une interface utilisateur identique en situation de mobilité et à proximité de l'équipement multimédia.

Ce procédé de contrôle d'équipement multimédia selon l'invention fait notamment intervenir un serveur distant accessible depuis le terminal mobile via un réseau de communication. Selon un tel procédé, toute l'interface utilisateur, la présentation et la restitution des données multimédias sur le terminal mobile, ainsi que l'intelligence du service d'accès à l'équipement multimédia sont assurées par le serveur distant. L'équipement multimédia n'a qu'un rôle « d'esclave » vis-à-vis du serveur distant qui joue le rôle du « maître » en transmettant vers l'équipement multimédia des requêtes à exécuter. Le terminal mobile quant à lui n'est jamais directement en relation (c'est-à-dire qu'il ne communique pas directement) avec l'équipement multimédia, mais toujours par l'entremise du serveur distant.

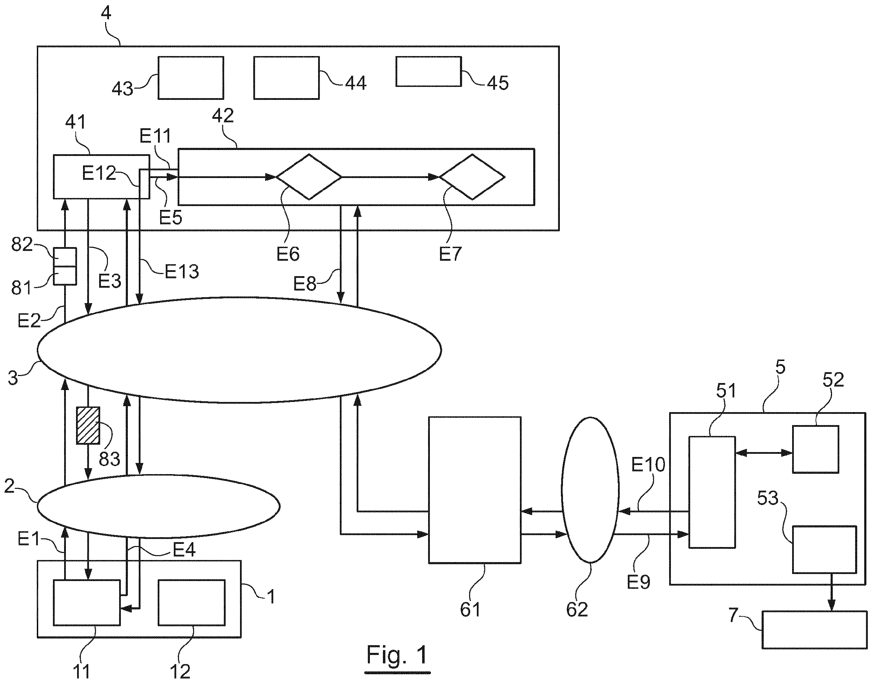

Ce principe général est illustré en **figure 1****.**

De façon classique, on suppose qu'un terminal mobile 1, par exemple un smartphone, comprend un module de communication radio (non représenté) lui conférant la capacité de se connecter via une liaison sans fil 2 (par exemple une liaison GPRS, Edge, UMTS, WiFi, Bluetooth,...) à un réseau de communication 3, par exemple, de type Internet. Le terminal mobile 1 comprend en outre un browser 11 (« navigateur » en français) permettant de transmettre les demandes saisies par un utilisateur (par exemple via un clavier, un joystick, un bouton, ou tout autre interface homme/machine (IHM),...) vers un serveur distant 4 situé sur le réseau de communication 3. Le terminal mobile comprend également un client de streaming 12 permettant de restituer un flux multimédia envoyé en mode « streaming ».

Selon l'invention, le serveur distant 4 héberge la logique et l'interface utilisateur du service d'accès et d'utilisation d'un équipement multimédia 5.

Dans ce mode de réalisation particulier, le serveur distant 4 comprend un serveur de pages 41 permettant de servir des pages (par exemple au format WML, XHTML, HTML,...) à destination du browser 11 du terminal mobile 1 et un serveur applicatif 42 permettant d'une part de traduire les demandes de l'utilisateur saisies sur le terminal mobile 1 et d'autre part d'envoyer des requêtes à l'équipement multimédia 5.

Le serveur de pages 41 est mis en oeuvre lorsque l'utilisateur clique (via l'IHM du terminal mobile) sur un lien d'accès à des pages (WML, XHTML ou HTML) présentant des fonctions impliquant l'équipement multimédia 5.

Un mécanisme d'authentification unique, par exemple, de type SSO (« Single Sign On » en anglais) est mis en oeuvre lorsque l'utilisateur commence à browser (c'est-à-dire naviguer) les pages servies par le serveur de pages 41. Dans le présent mode de réalisation, ce mécanisme d'authentification unique permet à un utilisateur déjà authentifié pour l'accès à un premier service (par exemple l'accès au portail personnalisé offert par un offreur de service) de s'affranchir d'une authentification supplémentaire lors du passage à un autre service (en l'occurrence ici le serveur de pages pour la commande de l'équipement multimédia 5).

Il est à noter que dans le cas d'un accès par réseau cellulaire, l'authentification au premier service est automatique du fait que le réseau cellulaire authentifie le terminal mobile 1 sur la base de son identifiant SIM. Ainsi, lorsque le serveur de pages 41 est mis en oeuvre, il reçoit une requête HTTP accompagnée du numéro MSISDN (« Mobile Station Integrated Services Digital Network » en anglais) du terminal mobile 1. La fiabilité de cette valeur de MSISDN est assurée par le réseau cellulaire 2.

Par ailleurs, on note que dans le cas d'un accès par un autre réseau d'accès (par exemple Wifi), l'authentification au premier service n'est pas automatique. En effet, dans ce cas, l'utilisateur doit saisir un login et/ou un mot de passe de façon à permettre à un opérateur de service de retrouver le numéro MSISDN du terminal mobile. Une requête HTTP accompagnée du numéro MSISDN certifié par le réseau d'accès peut alors être transmise au serveur de pages 41.

Comme on le verra par la suite, le serveur de pages 41 communique régulièrement avec le serveur applicatif 42. Notamment, lors de la première communication, le serveur de pages 41 « passe la main » (c'est-à-dire transmet la requête HTTP du terminal mobile) au serveur applicatif 42 et transmet en même temps à ce dernier le numéro MSISDN certifié par le réseau d'accès 2.

Dans ce mode de réalisation particulier, le serveur applicatif 42 a pour fonctions de localiser l'adresse IP à laquelle il peut joindre l'équipement multimédia 5 et s'authentifier directement ou indirectement auprès de celui-ci.

Pour ce faire, le serveur applicatif 42 maintient une table 45 mettant en correspondance: le numéro MSISDN du terminal mobile, un identifiant d'équipement multimédia, l'adresse IP à laquelle il peut joindre l'équipement multimédia et une clé d'accès à l'équipement multimédia.

On décrit maintenant un exemple d'enchaînement successif d'étapes relatif à une phase d'initialisation d'une communication entre le serveur applicatif 42 et l'équipement multimédia 5.

Dans un premier temps, le serveur applicatif 42 vérifie dans sa table 45 de correspondance (préalablement enregistrée) si le numéro MSISDN du terminal mobile (certifié par le réseau d'accès) correspond bien à un équipement multimédia 5 qui lui est connu. Dans le cas d'une vérification positive, le serveur applicatif 42 note l'adresse IP nécessaire pour accéder à l'équipement multimédia 5 et la clé d'accès correspondante.

Dans un second temps, le serveur applicatif 42 se connecte à l'équipement multimédia 5 se trouvant à l'adresse IP précédemment notée et met en oeuvre un mécanisme d'authentification basé sur la clé d'accès.

On note que dans un mode de connexion direct, l'équipement multimédia 5 détient lui-même l'adresse IP et met en oeuvre la clé d'accès pour autoriser ou non l'accès du serveur distant 4.

En revanche, dans un mode de connexion indirect, une passerelle relais domestique 61 (par exemple du type LiveBox) détient l'adresse IP et met en oeuvre un système de routage NAT permettant d'adresser l'équipement multimédia 5 demandé par l'utilisateur. La clé d'accès autorisant l'accès du serveur distant 4 à l'équipement multimédia 5 peut être mise en oeuvre soit par l'équipement multimédia lui-même, soit, en coupure, par la passerelle relais domestique 61. Il est à noter que l'équipement multimédia 5 peut être connecté à la passerelle relais domestique 61 via une liaison 62 filaire ou radio (du type WiFi, Bluetooth,...).

Cette combinaison de « l'intelligence dans le réseau pour l'usage de l'équipement multimédia » et du double mécanisme d'authentification (authentification du MSISDN et authentification de la clé d'accès) sont des aspects importants de la mise en oeuvre de l'invention.

Comme déjà indiqué, le serveur distant 4 est maître des échanges de données avec l'équipement multimédia 5.

À titre d'exemple illustratif et non limitatif d'un mode de réalisation de l'invention, on décrit ci-après des requêtes pouvant être transmises par le serveur distant 4 (« le maître ») à l'équipement multimédia 5 (« l'esclave »), via le réseau de communication 3 et selon un protocole de communication « maître/esclave ». Il est à noter que suivant la nature de la requête, le serveur distant 4 et l'équipement multimédia 5 s'échangent ou non des données multimédias. Dans tous les cas, l'équipement multimédia 5 exécute la requête et l'acquitte auprès du serveur distant.

La requête « LIST » ordonne à l'équipement multimédia 5 de lister des contenus multimédias stockés sur son espace de stockage 51. Bien sûr, ce type de requête ne peut être exécutée que par un équipement multimédia équipé d'un module de stockage. Pour cette requête « LIST », les paramètres transmis par le serveur distant 4 sont, par exemple : le répertoire à lister, des critères simples comme des fichiers commençant de A à D, etc.... Suite à la réception et l'exécution de la requête, l'équipement multimédia transmet la liste de contenus demandée au serveur distant.

La requête « GET » ordonne à l'équipement multimédia 5 d'envoyer un contenu multimédia stocké sur son espace de stockage 51. Pour cette requête « GET », les paramètres transmis par le serveur distant 4 sont, par exemple : le nom et le chemin du fichier multimédia requis. Suite à la réception et l'exécution de la requête, l'équipement multimédia transmet les données multimédias du fichier demandé au serveur distant. Bien sûr, un contrôle de flux, de type classique en soi, est mis en oeuvre par le serveur distant.

La requête « PUT » ordonne à l'équipement multimédia 5 de stocker un contenu multimédia sur son espace de stockage 51. Pour cette requête « PUT », les paramètres transmis par le serveur distant 4 sont, par exemple : le nom et le chemin (sur l'espace de stockage de l'équipement multimédia) où l'on va stocker le fichier transmis. Ce type de requête permet donc au serveur distant de transmettre et de stocker des données multimédias sur l'espace de stockage de l'équipement multimédia. De la même façon que pour la requête « GET », le serveur distant met en oeuvre un contrôle de flux, de type classique en soi.

La requête « PLAY » ordonne à l'équipement multimédia 5 de restituer, au moyen de son module de restitution de contenus, des données multimédias via un équipement multimédia de restitution dédié, par exemple, une télévision, un Home Cinéma, etc. Dans le cas où il s'agit de faire jouer un contenu multimédia stocké sur l'équipement multimédia, les paramètres transmis par le serveur distant 4 sont, par exemple, le nom et le chemin du fichier multimédia (sur l'espace de stockage de l'équipement multimédia). En revanche, dans le cas où il s'agit de faire jouer un contenu multimédia stocké sur un stockage réseau, les paramètres transmis par le serveur distant 4 peuvent être des caractéristiques sur le fichier multimédia tels que, par exemple : son nom, le titre, le nom de l'artiste, la durée, ou tout autre paramètre pouvant être utilisé par l'équipement multimédia 5 pour affichage. Dans le mode de réalisation illustré, le stockage réseau est embarqué dans le serveur distant.

Comme indiqué précédemment, certaines requêtes n'aboutissent pas à un échange de données multimédias entre le serveur distant et l'équipement multimédia. Ainsi, les requêtes du type « STOP » (ordonne à l'équipement multimédia d'arrêter la restitution du contenu multimédia), « PAUSE » (ordonne à l'équipement multimédia d'interrompre temporairement la restitution du contenu multimédia), « Volume+ » (ordonne à l'équipement multimédia d'augmenter le volume sonore de la restitution) ou encore « Volume- » (ordonne à l'équipement multimédia de diminuer le volume sonore de la restitution) permettent seulement de contrôler les fonctions de contrôle proprement dites de l'équipement multimédia.

On décrit maintenant, en relation avec la **figure** 1, l'enchaînement successif des différentes étapes du procédé selon l'invention.

Une phase de demande de page d'accès à l'équipement multimédia 5 comprend une première étape E1, au cours de laquelle l'utilisateur clique (via l'IHM de son terminal mobile) sur un lien Internet disponible depuis une page (affichée sur l'écran de son terminal mobile) de son portail d'accueil. Lors de l'étape E2, le serveur de pages 41 reçoit une requête http 81 (correspondant à la demande de l'utilisateur) accompagnée du numéro MSISDN 82 du terminal mobile, certifié par le réseau d'accès 2 au moyen du mécanisme d'authentification SSO. Lors de l'étape E3, le serveur de pages 41 transmet une page d'accueil 83 au browser du terminal mobile 1.

Une phase de demande de lancement d'une fonctionnalité sur l'équipement multimédia 5 comprend une étape E4, au cours de laquelle l'utilisateur clique sur un lien (correspondant par exemple à la commande de listage de fichiers musicaux) disponible sur la page d'accueil 83 reçue par le browser 11.

Les étapes suivantes sont relatives à une phase de traduction de la demande du terminal mobile 1.

Lors de l'étape E5, le serveur de pages 41 « passe la main » (c'est-à-dire transmet la demande du terminal mobile) au serveur applicatif 42 et transmet à ce dernier le numéro MSISDN 82 du terminal mobile certifié par le réseau d'accès 2.

Lors de l'étape E6, le serveur applicatif 42 met en oeuvre les mécanismes d'adressage IP et d'authentification (authentification par clé d'accès) de façon à se connecter directement ou indirectement (par exemple via une passerelle résidentielle 61) à l'équipement multimédia 5.

Lors de l'étape E7, le serveur applicatif 42 traduit la demande de l'utilisateur sous la forme d'une requête compréhensible par l'équipement multimédia 5 (par exemple du type « LIST », « GET »,...).

Lors de l'étape E8, le serveur applicatif 42 transmet la requête à l'équipement multimédia 5 via le réseau Internet 3 et selon un protocole de communication « maître/esclave ».

L'étape E9 est relative à une phase de réception et d'exécution de la requête par l'équipement multimédia. Suivant la nature de la requête, des données multimédias peuvent être échangées entre le serveur applicatif et l'équipement multimédia, et inversement.

L'exécution de la requête par l'équipement multimédia 5 est soit en cours, soit terminée. Dans les deux cas, un ensemble d'informations formaté (construit sur la base de l'acquittement de la requête par l'équipement multimédia et éventuellement de données multimédia transmises E10 par l'équipement multimédia au serveur applicatif 42) est passé E11 au serveur de pages 41.

Enfin, le serveur de pages 41 formate E12 l'ensemble des informations sous la forme de page(s) accepté(es) par le browser 11 du terminal mobile 1 (c'est-à-dire visualisable sur l'écran du terminal mobile) et transmet E13 la première page à ce dernier.

Il est à noter que dans le présent mode de réalisation, on met en oeuvre un accès sécurisé à l'équipement multimédia avec les moyens d'authentification du réseau d'accès.

Par ailleurs, les étapes du procédé selon l'invention décrites précédemment sont applicables aussi bien dans un usage distant que dans un usage proche de l'équipement multimédia. Ainsi, l'interface utilisateur et plus généralement le service offert à l'utilisateur sur son terminal mobile sont identiques dans ces deux configurations d'usage.

### 6.2 Contrôle d'un équipement multimédia en « mode Distant »

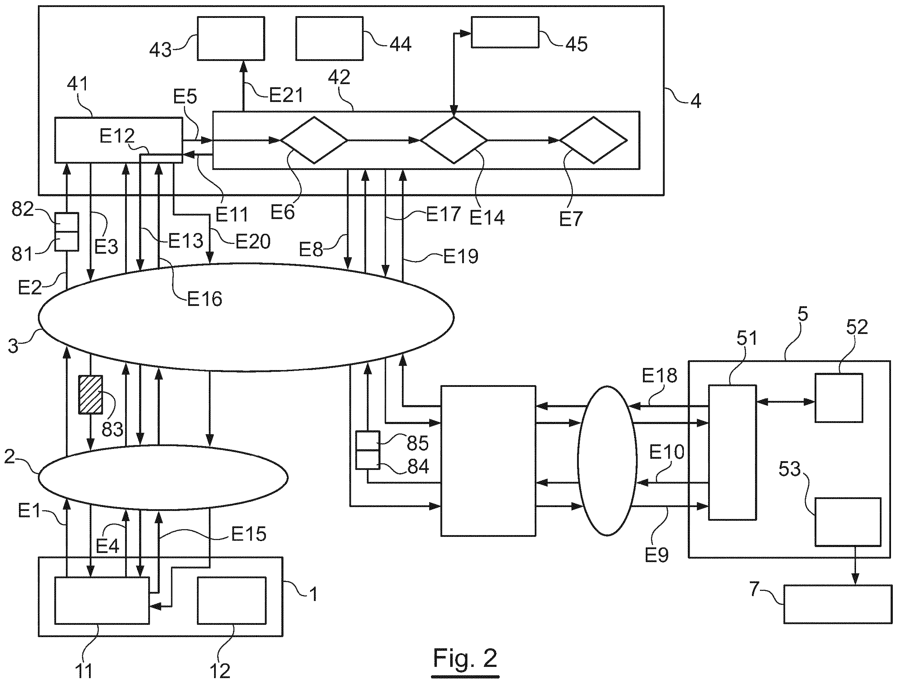

On présente maintenant avec la **figure 2** un premier mode de réalisation dans lequel un utilisateur accède à distance à un équipement multimédia depuis un terminal mobile. Plus précisément, dans la suite de ce document on décrit quatre exemples de ce premier mode de réalisation.

Comme on le notera certaines étapes de la figure 2 sont identiques (mêmes références alphanumériques) à certaines étapes décrites précédemment à la figure 1. Ces étapes communes (E1 à E13) sont décrites de nouveau ci-après.

### 6.2.1 Téléchargement d'un fichier vers un terminal mobile

Dans un premier exemple du premier mode de réalisation (**figure 2**), un utilisateur utilise le browser 11 de son terminal mobile 1 pour d'une part lister des fichiers d'un type particulier localisés sur un équipement multimédia 5 distant et d'autre part sélectionner un fichier parmi les fichiers listés, de façon à le copier vers son terminal mobile.

Dans le présent mode de réalisation, le fichier demandé par l'utilisateur est un fichier musical au format MP3. L'Homme du Métier étendra sans difficulté cet enseignement à tout autre type de fichier multimédia (AVI, JPEG,...).

Une phase de demande de page d'accès à l'équipement multimédia 5 comprend une première étape E1, au cours de laquelle l'utilisateur clique (via l'IHM de son terminal mobile) sur un lien Internet disponible depuis une page de son portail d'accueil. Lors de l'étape E2, le serveur de pages 41 reçoit une requête http 81 (correspondant à la demande de l'utilisateur) accompagnée du numéro MSISDN 82 du terminal mobile, certifié par le réseau d'accès 2 (réseau cellulaire GPRS, UMTS,...) au moyen du mécanisme d'authentification SSO. Lors de l'étape E3, le serveur de pages 41 transmet une page d'accueil 83 au browser 11 du terminal mobile.

Une phase de demande de lancement d'une fonctionnalité sur l'équipement multimédia comprend une étape E4, au cours de laquelle l'utilisateur clique sur un lien correspondant au listage de fichiers musicaux disponible sur la page d'accueil reçue par le browser 11.

Les étapes suivantes sont relatives à une phase de traduction de la demande du terminal mobile.

Lors de l'étape E5, le serveur de pages 41 « passe la main » (c'est-à-dire transmet la demande du terminal mobile) au serveur applicatif 42 et transmet à ce dernier le numéro MSISDN 82 du terminal mobile certifié par le réseau d'accès 2.

Lors de l'étape E6, le serveur applicatif 42 met en oeuvre les mécanismes d'adressage IP et d'authentification (authentification par clé d'accès) de façon à se connecter directement ou indirectement (par exemple via une passerelle résidentielle 61) à l'équipement multimédia 5.

Lors de l'étape E14, le serveur applicatif 42 détermine le répertoire physique sur lequel se trouvent les fichiers musicaux sur l'équipement multimédia 5. Pour ce faire, le serveur applicatif met en oeuvre une table 45 de correspondance lui indiquant, suivant le modèle de l'équipement multimédia (cette information peut être préenregistrée dans la table 45 de correspondance décrite précédemment), le répertoire physique dédié au stockage des musiques.

Lors de l'étape E7, le serveur applicatif 42 traduit la demande de l'utilisateur sous la forme d'une requête « LIST » exécutable par l'équipement multimédia 5.

Lors de l'étape E8, le serveur applicatif 42 transmet la requête « LIST » à l'équipement multimédia via le réseau Internet 3 et selon un protocole de communication « maître/esclave ».

Lors de l'étape E9, l'équipement multimédia 5 exécute la requête « LIST » et transmet E10 au serveur applicatif 42 la liste 84 des fichiers musicaux accompagnés de leurs caractéristiques 85 comme par exemple leur chemin d'accès physique ou logique sur le module de stockage de l'équipement multimédia.

Lors de l'étape E11, le serveur applicatif 42 renvoie ces données 84 et 85 au serveur de pages. Dans un autre mode de réalisation, le serveur applicatif 42 enrichit les données renvoyées au serveur de pages 41 avec des données supplémentaires. Il est à noter que les données supplémentaires peuvent dépendre des données multimédias stockées sur l'équipement multimédia. Par exemple, les données ajoutées peuvent être des mots clés extraits des listes de données multimédias récupérées par l'équipement multimédia. L'équipement multimédia utilise ensuite ces mots clés pour demander à des serveurs adéquats (serveurs de publicité, de dates de concerts, de vente de musique en ligne,...) des offres en rapport avec ces mots clés.

Lors de l'étape E12, le serveur de pages 41 formate les données de la liste sous forme d'une (ou plusieurs) page(s) (WML, XHTML ou HTML, ...).

Lors de l'étape E13, la première page (WML, XHTML ou HTML,...) contenant les données de la liste des fichiers musicaux est transmise au terminal mobile 1, puis affichée sur le browser 11 de ce dernier.

Lors de l'étape E15, l'utilisateur choisit de télécharger sur son terminal mobile 1 un fichier musical donné en cliquant sur le lien correspondant. Ceci a pour effet d'envoyer la demande HTTP correspondante au serveur de pages 41.

Lors de l'étape E16, le serveur de pages 41 reçoit la demande http, puis "passe la main" (c'est-à-dire transmet la demande du terminal mobile) au serveur applicatif 42 qui traduit la demande sous une forme compréhensible par l'équipement multimédia. A ce stade, le serveur applicatif 42 détermine le chemin du fichier musical donné localisé dans le module de stockage 52 de l'équipement multimédia, à partir des informations reçues à l'étape E10 et construit une requête de type « GET ».

Lors de l'étape E17, le serveur applicatif 42 transmet la requête « GET » à l'équipement multimédia 5.

Lors de l'étape E18, l'équipement multimédia 5 transmet les octets constituant le fichier musical donné au serveur applicatif 42 selon le protocole d'échange entre le serveur applicatif (« maître ») et l'équipement multimédia (« esclave »).

Ensuite, lors de l'étape E19, au fur et à mesure de l'arrivée des octets, le serveur applicatif 42 transmet ces octets au serveur de pages 41 qui les formate sous la forme du protocole accepté par le browser 11 du terminal mobile pour le téléchargement de fichiers (HTTP ou autre). Il est à noter que certains protocoles de téléchargement vers le terminal mobile (par exemple du type FTP) peuvent être directement traités par le serveur applicatif sans être relayés via le serveur de pages. Dans une variante de réalisation, il est possible d'attendre le transfert complet d'un fichier musical (c'est-à-dire, de tous les octets le constituant) sur le serveur applicatif avant de le retransmettre au terminal mobile.

Enfin, lors de l'étape E20, le serveur de pages 41 transmet au fur et à mesure les données constituant le fichier musical MP3 requis par l'utilisateur au terminal mobile qui les stocke dans un espace mémoire dédié (non représenté).

Dans une variante de mise en oeuvre, il est possible d'envisager qu'un utilisateur demande une copie totale ou partielle du contenu d'un équipement multimédia vers un stockage réseau 43. Ce stockage réseau 43 peut alors être utilisé comme un disque miroir de contenus multimédias. Ainsi, l'utilisateur a la possibilité d'accéder, via ce stockage réseau, à toute ou partie du contenu de l'équipement multimédia malgré la déconnexion réseau ou la mise hors tension de l'équipement multimédia.

Comme on le verra dans la suite de la description, on peut offrir à un utilisateur des services sophistiqués (« play lists », « album photos », « streaming »,...) sans pour autant compliquer l'équipement multimédia, c'est-à-dire sans embarquer de serveur(s) sur ce dernier.

### 6.2.2 Stockage d'une « play list » sur un stockage réseau

Dans un second exemple du premier mode de réalisation **(****figure** 2), un utilisateur utilise le browser 11 de son terminal mobile pour d'une part lister des fichiers musicaux localisés sur un équipement multimédia 5 distant et d'autre part sélectionner plusieurs fichiers parmi les fichiers musicaux listés, de façon à constituer et à stocker une « play list » sur un stockage réseau 43.

Par souci de simplification de la description, on détaille ci-après uniquement les étapes qui différencient le second exemple du premier exemple décrit précédemment. Comme on le notera certaines étapes (E15 et E16) du premier exemple ont été modifiées de manière à permettre la mise en oeuvre d'un service de stockage de « play lists ».

Comme illustré sur la **figure 2****,** lors de l'étape E15, l'utilisateur sélectionne plusieurs fichiers musicaux parmi la liste des fichiers musicaux affichée sur le browser du terminal mobile et clique sur un lien relatif à une demande d'établissement d'une « play list ».

Lors de l'étape E16, le serveur de pages reçoit la requête http correspondant à la demande d'établissement de la « play list », puis « passe la main » (c'est-à-dire transmet la requête) au serveur applicatif.

Lors de l'étape E21, le serveur applicatif 42 fait enregistrer les caractéristiques de la "play list" (c'est-à-dire les caractéristiques des fichiers sélectionnés) dans un stockage réseau 43 réservé à l'utilisateur.

Ensuite, lors de l'étape suivante (non représentée), le serveur applicatif acquitte l'action au serveur de pages qui construit alors une page d'acquittement (WML, XHTML,...) de la demande.

Enfin, lors de la dernière étape (non représentée), la page d'acquittement (WML, XHTML,...) de la demande est transmise et affichée sur le browser du terminal mobile.

### 6.2.3 Consultation de fichiers photos

Dans un troisième exemple du premier mode de réalisation (**figure 2**), un utilisateur utilise le browser de son terminal mobile pour d'une part lister des photos localisées sur un équipement multimédia distant et d'autre part sélectionner une photo parmi les photos listées, de façon à la visualiser sur le terminal mobile.

Par souci de simplification de la description, on détaille ci-après uniquement les étapes qui différencient le troisième exemple du premier exemple décrit précédemment. Comme on le notera certaines étapes (E1, E15, E18 à E20) du premier exemple ont été modifiées de manière à permettre la mise en oeuvre d'un service de consultation de fichiers photos.

En référence à la **figure 2****,** lors de l'étape E1, l'utilisateur clique sur un lien pour faire afficher les photos localisées sur l'équipement multimédia.

Lors de l'étape E15, l'utilisateur sélectionne une photo parmi une pluralité de photos et clique sur un lien relatif à une demande du type "visualisation".

Lors de l'étape E18, l'équipement multimédia transmet les octets constituant le fichier photo au serveur applicatif.

Ensuite, lors de l'étape E19, le serveur applicatif 42 modifie la photo afin de l'adapter aux caractéristiques d'affichage du terminal mobile (résolution, taille,...).

Enfin, lors de l'étape E20, les données du fichier photo sont transmises par le serveur de pages au terminal mobile qui affiche la photo sur son écran.

Dans une autre variante de réalisation, l'utilisateur peut constituer un album photo pouvant être stocké sur le stockage réseau. Ainsi, on peut envisager la mise en oeuvre de services à valeur ajoutée sur la base de ces albums, par exemple, un service de tirage papier haute qualité.

### 6.2.4 Ecoute d'un fichier en mode streaming

Dans un quatrième exemple du premier mode de réalisation **(****figure** 2), un utilisateur utilise le browser de son terminal mobile pour d'une part lister des fichiers musicaux localisés sur un équipement multimédia distant et d'autre part sélectionner un fichier parmi les fichiers musicaux listés, de façon à le faire streamer pour une écoute sur son terminal mobile.

Par souci de simplification de la description, on détaille ci-après uniquement les étapes qui différencient le quatrième exemple du premier exemple décrit précédemment. Comme on le notera certaines étapes (E15) du premier exemple ont été modifiées de manière à permettre la mise en oeuvre d'un service d'écoute de fichiers en « mode streaming ».

En référence à la **figure 2****,** lors de l'étape E15, l'utilisateur sélectionne un fichier parmi une pluralité de fichiers musicaux et clique sur un lien relatif à une demande du type "streamer".

Ensuite, lors d'une autre étape (non représentée), au fur et à mesure de l'arrivée des octets, le serveur applicatif 42 transmet ces octets au serveur de streaming 44 qui les formate sous la forme du protocole accepté par le client de streaming 12 du terminal mobile (par exemple de type RTSP) et suivant les capacités du réseau d'accès 2 du terminal mobile.

Enfin, lors d'une dernière étape (non représentée), le client de streaming 12 du terminal mobile reçoit au fur et à mesure les données constituant le fichier musical requit par l'utilisateur qui écoute, de façon simultanée à l'arrivé des données, la musique correspondante, via les moyens de restitution sonore (non représentés) de son terminal mobile.

Dans le mode de réalisation illustré, le serveur de streaming 44 est embarqué sur le serveur distant 4. De façon avantageuse, ce serveur de streaming 44 peut s'adapter aux contraintes des différents types de terminaux mobiles (c'est-à-dire aux protocoles de streaming et de codage des différents terminaux) et de réseaux d'accès.

### 6.3 Contrôle d'un équipement multimédia en « mode Local »

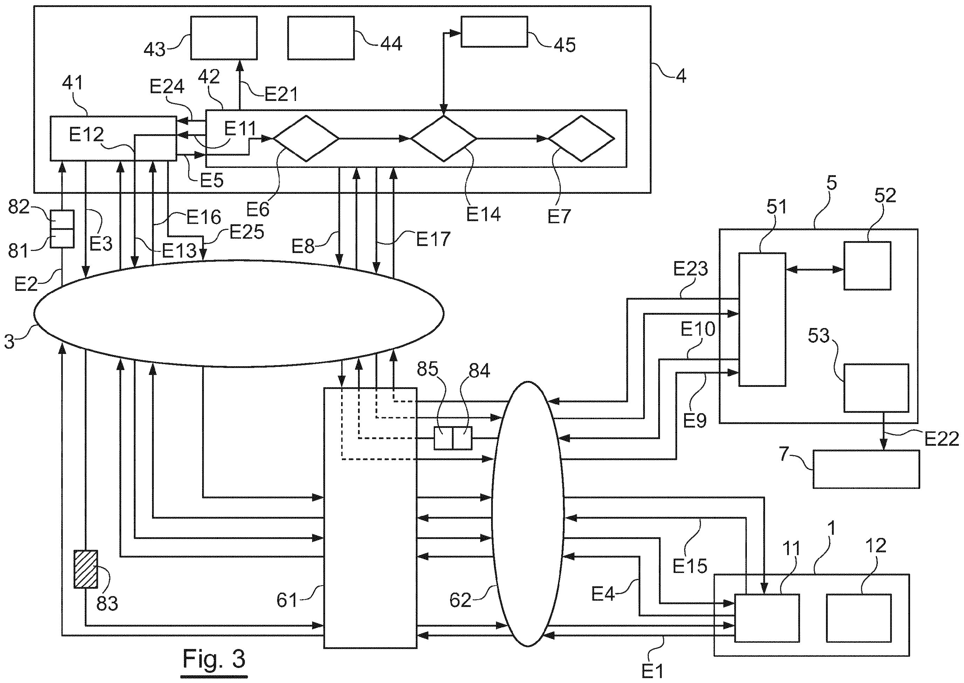

On présente maintenant avec la **figure 3** un deuxième mode de réalisation dans lequel un utilisateur accède en local (usage proche de l'équipement multimédia) à un équipement multimédia depuis un terminal mobile. Plus précisément, dans la suite de ce document on décrit deux exemples de ce deuxième mode de réalisation.

Comme on le notera certaines étapes de la figure 3 sont identiques (mêmes références alphanumériques) à certaines étapes décrites précédemment aux figures 1 et 2. Par souci de clarté, ces étapes communes ne sont pas décrites de nouveau ci-après.

### 6.3.1 Lecture d'un fichier musical sur un équipement multimédia

Dans un premier exemple du deuxième mode de réalisation (**figure 3**), un utilisateur utilise le browser 11 de son terminal mobile pour d'une part lister des fichiers musicaux (par exemple au format MP3) localisés sur un équipement multimédia 5 de proximité (chaîne HiFi, Home Cinéma,...) et d'autre part sélectionner un fichier parmi les fichiers musicaux listés, de façon à le faire jouer par l'équipement multimédia 5.

Dans le présent mode de réalisation, le terminal mobile 1 communique avec le serveur distant 4 soit au travers d'un réseau cellulaire, soit au travers d'une liaison 62 sans fil de proximité (WiFi, Bluetooth,...) connectée à une liaison haut débit (par exemple de type ADSL).

Il est à noter que dans le cas d'un usage local, le terminal mobile peut proposer à l'utilisateur une interface utilisateur (menus d'usage) identique à celle proposée dans le cas d'un usage distant. En outre, dans le cas d'un usage local, le serveur distant peut enrichir l'interface utilisateur avec les fonctions de restitution/contrôle de l'équipement multimédia, tels que, par exemple, les fonctions « PLAY », « STOP », « Pause », « Volume+ », « Volume- »,....

Par ailleurs, dans le cas d'un usage local, le serveur de pages reçoit de la part du terminal mobile une requête http (correspondant à la demande de l'utilisateur) accompagnée du numéro MSISDN du terminal mobile, certifié par un mécanisme d'identification ou d'authentification. Ce mécanisme peut-être en particulier :
- un login et/ou un mot de passe saisi par l'utilisateur dés le début de l'accès de l'utilisateur au portail de son opérateur de service, qui permet à l'opérateur de service de retrouver le numéro MSISDN du terminal mobile et de le passer ensuite certifié au serveur de pages 41 (par un mécanisme SSO),
- ou bien un autre mécanisme mettant en oeuvre les mécanismes d'authentification basés sur la carte SIM du mobile mais au travers d'un réseau d'accès WiFi ou Bluetooth.

Par souci de simplification de la description, on détaille ci-après uniquement les étapes qui différencient le premier exemple du deuxième mode de réalisation du premier exemple du premier mode de réalisation décrit précédemment. Comme on le notera certaines étapes (E15 à E17) du premier exemple du premier mode de réalisation ont été modifiées de manière à permettre la mise en oeuvre d'un service de lecture de fichiers musicaux en « mode local ».

Comme illustré sur la **figure 3****,** lors de l'étape E15, l'utilisateur choisit de faire jouer sur l'équipement multimédia un fichier musical donné en cliquant sur le lien correspondant. Ceci a pour effet d'envoyer la demande HTTP correspondante au serveur de pages.

Lors de l'étape E16, le serveur de pages reçoit la demande http, puis "passe la main" (c'est-à-dire transmet la demande du terminal mobile) au serveur applicatif qui traduit la demande sous une forme compréhensible par l'équipement multimédia. A ce stade, le serveur applicatif détermine le chemin du fichier musical donné localisé dans le module de stockage de l'équipement multimédia, à partir des informations reçues à l'étape E10 et construit une requête de type « PLAY ».

Lors de l'étape E17, le serveur applicatif transmet la requête « PLAY » à l'équipement multimédia.

Lors de l'étape E22, l'équipement multimédia déclenche la lecture du fichier sur la HiFi.

Lors de l'étape E23, l'équipement multimédia acquitte au serveur applicatif le lancement de l'action.

Ensuite, lors de l'étape E24, le serveur applicatif acquitte l'action au serveur de pages qui construit alors une page de navigation (WML, XHTML,...) présentant des menus de télécommande de l'équipement multimédia (« PLAY », « STOP », « Pause », « Volume+ », « Volume- »,...).

Enfin, lors de l'étape E25, la page de navigation (WML, XHTML,...) est transmise et affichée sur le browser du terminal mobile.

### 6.3.2 Lecture d'une « play list » sur un stockage réseau

Dans un second exemple du deuxième mode de réalisation **(****figure 3**), un utilisateur utilise le browser 11 de son terminal mobile pour faire jouer une « play list » stockée sur son stockage réseau 43.

Dans ce mode de réalisation particulier, seule la (ou les) liste(s) des fichiers musicaux (c'est-à-dire la « play list ») est(sont) stockée(s) sur le stockage réseau, tous les fichiers musicaux eux-mêmes restent stockés sur l'équipement multimédia.

L'utilisateur demande au serveur distant une page d'accès à l'équipement multimédia en cliquant (via l'IHM de son terminal mobile) sur un lien Internet disponible depuis une page (affichée sur l'écran de son terminal mobile) de son portail d'accueil.

Le serveur de pages reçoit une requête http (relative à la demande de l'utilisateur) accompagnée du numéro MSISDN du terminal mobile, certifié par un mécanisme d'identification ou d'authentification. Ce mécanisme peut-être en particulier :
- un login et/ou un mot de passe saisi par l'utilisateur dés le début de l'accès de l'utilisateur au portail de son opérateur de service, qui permet à l'opérateur de service de retrouver le numéro MSISDN du terminal mobile et de le passer ensuite certifié au serveur de pages 41 (par un mécanisme SSO),
- ou bien un autre mécanisme mettant en oeuvre les mécanismes d'authentification basés sur la carte SIM du mobile mais au travers d'un réseau d'accès WiFi ou Bluetooth.

Le serveur de pages transmet ensuite une page d'accueil au browser du terminal mobile.

L'utilisateur clique sur un lien de la page d'accueil correspondant au listage de « play lists » préalablement constituées par l'utilisateur et enregistrées sur le stockage réseau.

Le serveur de pages « passe la main » (c'est-à-dire transmet la demande du terminal mobile) au serveur applicatif et transmet à ce dernier le numéro MSISDN du terminal mobile certifié par le réseau d'accès radio de proximité.

Le serveur applicatif met en oeuvre les mécanismes d'adressage IP et d'authentification (authentification par clé d'accès) de façon à se connecter directement ou indirectement (par exemple via une passerelle résidentielle) à l'équipement multimédia.

Si l'équipement multimédia est disponible, le serveur applicatif demande au stockage réseau la liste des « play lists » de l'utilisateur.

Le stockage réseau transmet alors au serveur applicatif la liste des « play lists » de l'utilisateur accompagnée de leurs caractéristiques telles que, par exemple, le chemin d'accès physique ou logique sur la mémoire de stockage de l'équipement multimédia.

Le serveur de pages formate la liste des « play lists » (et leurs caractéristiques) sous la forme d'une page (WML, XHTML, HTML,...) et transmet cette page au terminal mobile. Le terminal mobile affiche ensuite sur son browser la liste des « play lists ».

Parmi les « play lists » affichées, l'utilisateur sélectionne une « play list » et clique sur un lien correspondant à la lecture de la « play list » sélectionnée.

Le serveur de pages reçoit la demande http, puis "passe la main" (c'est-à-dire transmet la demande du terminal mobile) au serveur applicatif qui traduit la demande sous la forme d'une requête (de type « PLAY ») consistant à faire jouer le premier fichier de la « play list ».

A ce stade, le serveur applicatif détermine le chemin du premier fichier musical dans le module de stockage de l'équipement multimédia à partir des caractéristiques de la « play list » et construit une requête de type « PLAY ».

Le serveur applicatif transmet la requête « Play » à l'équipement multimédia avec en paramètres le nom et le chemin du premier fichier musical.

L'équipement multimédia déclenche la lecture du premier fichier musical, par exemple, sur la HiFi et acquitte au serveur applicatif le lancement de cette action.

Ensuite, le serveur applicatif acquitte l'action au serveur de pages qui construit alors une page de navigation (WML, XHTML,...) présentant des menus de télécommande de l'équipement multimédia (« PLAY », « STOP », « Pause », « Volume+ », « Volume- »,...).

La page de navigation (WML, XHTML,...) est transmise et affichée sur le browser du terminal mobile.

A la fin de la lecture du premier fichier musical, l'équipement multimédia transmet au serveur applicatif un acquittement de fin de lecture. Le serveur applicatif transmet alors à l'équipement multimédia une requête « Play » lui demandant de jouer le second fichier musical de la « play list ».

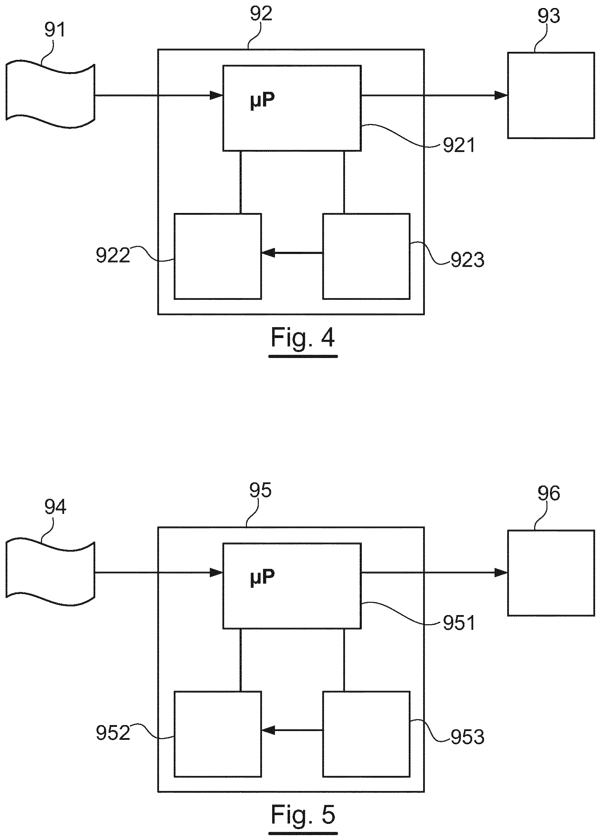

La **figure 4** présente la structure d'un équipement multimédia 92 selon l'invention, qui comprend une mémoire 922, et une unité de traitement 921 équipée d'un microprocesseur µP, qui est piloté par un programme d'ordinateur (ou application) 923 mettant en oeuvre le procédé selon l'invention. L'unité de traitement 921 reçoit en entrée une requête 91 relative à une demande de lancement d'une fonctionnalité sur l'équipement multimédia. Le microprocesseur µP traite cette requête, selon les instructions du programme 923 de sorte qu'en fonction de la nature de la requête l'équipement multimédia transmet des données multimédias vers un serveur distant 93 ou génère une commande de contrôle d'un fichier multimédia.

La **figure 5** présente enfin la structure d'un serveur distant 95 selon l'invention, qui comprend une mémoire 952, et une unité de traitement 951 équipée d'un microprocesseur µP, qui est piloté par un programme d'ordinateur (ou application) 953 mettant en oeuvre le procédé selon l'invention. L'unité de traitement 951 reçoit en entrée une demande 94 de lancement d'une fonctionnalité sur l'équipement multimédia 92 décrit à la figure 4. Le microprocesseur µP traite cette demande, selon les instructions du programme 953, pour générer une requête 96 exécutable par l'équipement multimédia 92.

La technique de l'invention présente de nombreux avantages, dont une liste non exhaustive est donnée ci-dessous :
- amélioration de l'ergonomie de l'interface utilisateur. En effet, l'invention est basée sur la déportation de la logique et de l'interface utilisateur sur un serveur distant. Ce serveur distant coopère avec plusieurs serveurs (serveur de pages, serveur de streaming,...) de façon à offrir à un utilisateur des services sophistiqués (lecture en mode streaming, play list,...), sans devoir faire aucune modification complexe et coûteuse sur un équipement multimédia. L'invention permet également à l'utilisateur de disposer de services identiques dans un usage proche et distant de l'équipement multimédia. L'invention permet en outre à un opérateur de services d'accrocher simplement et efficacement des services à valeur ajoutée (publicités, propositions d'achats, commandes de navigation de l'équipement multimédia,...) à l'usage quotidien de l'équipement multimédia. L'invention permet aussi à l'utilisateur d'accéder en mode streaming à des contenus multimédias, quel que soit le type de terminal mobile et le réseau d'accès utilisés, et ce sans devoir héberger dans l'équipement multimédia un serveur de transcodage et de streaming coûteux,
- amélioration de la sécurisation de l'accès à un équipement multimédia. En effet, l'invention est basée sur l'authentification d'un terminal mobile par un serveur distant et l'authentification du serveur distant par l'équipement multimédia. Ce double mécanisme d'authentification doit être vérifié pour permettre l'accès du terminal mobile à l'équipement multimédia.

L'invention s'applique notamment à tout type d'équipement multimédia, et notamment, mais non exclusivement, aux équipements multimédias connectés à un réseau de communication via une passerelle résidentielle (par exemple du type LiveBox, FreeBox,...).

## Revendications

1. Procédé de contrôle par un terminal mobile (1) d'un équipement multimédia (5) de restitution et/ou de stockage de contenus multimédias, le terminal mobile (1) et l'équipement multimédia (5) étant connectés à un réseau de communication (3), **caractérisé en ce que** le procédé comprend les étapes suivantes :
- le terminal mobile (1) envoie (E4) à un serveur distant (4), via le réseau de communication (3), au moins une demande de lancement d'une fonctionnalité sur l'équipement multimédia (5) ;
- le serveur distant (4) traduit (E7) ladite au moins une demande du terminal mobile en au moins une requête et transmet (E8) ladite au moins une requête à l'équipement multimédia (5), via le réseau de communication (3), la requête étant une requête de fourniture d'un contenu multimédia ou de fourniture d'une liste de contenus multimédias ;
- l'équipement multimédia (5) reçoit et exécute (E9) ladite au moins une requête ;
- le serveur distant reçoit un contenu multimédia ou une liste de contenus multimédias transmis par l'équipement multimédia ;
- le serveur distant (4) commande le stockage du contenu multimédia ou de la liste de contenus multimédias dans un espace de stockage réseau (43) couplé au serveur distant, de façon que le terminal mobile puisse ultérieurement demander au serveur distant de commander la lecture du contenu multimédia ou de la liste de contenus multimédias stocké dans l'espace de stockage réseau (43).

2. Procédé selon la revendication 1, **caractérisé en ce que**, dans le cas où l'exécution de ladite au moins une requête se traduit par la transmission (E10) de données multimédia depuis l'équipement vers le serveur distant (4), le procédé comprend en outre les étapes suivantes :
- le serveur distant (4) traduit (E12) les données multimédias transmises par l'équipement multimédia (5) en des données multimédias transformées, se présentant sous une forme compréhensible par le terminal mobile (1) ;
- le serveur distant (4) transmet(E13) les données multimédia transformées au terminal mobile (1).

3. Procédé selon la revendication 2, **caractérisé en ce qu'**il comprend en outre l'étape suivante (E11): le serveur distant (4) enrichit les données multimédias transformées avec des données supplémentaires, de façon à transmettre au terminal mobile (1) des données enrichies.

4. Procédé selon l'une quelconque des revendications 1 à 3, **caractérisé en ce qu'**il met en oeuvre :
- un premier mécanisme d'authentification, permettant au serveur distant (4) d'authentifier le terminal mobile (1) et comprenant les étapes suivantes :
* un réseau d'accès (2), via lequel le terminal mobile (1) est connecté au réseau de communication (3), certifie un identifiant du terminal mobile (82);
* le serveur distant (4) reçoit l'identifiant du terminal mobile (82) certifié par le réseau d'accès (2) ;
- un second mécanisme d'authentification, permettant à l'équipement multimédia (5) d'authentifier le serveur distant (4) et comprenant les étapes suivantes :
* le serveur distant (4) maintient une table (45) qui associe à chaque identifiant de terminal mobile (82), un identifiant d'un équipement multimédia, une adresse à laquelle l'équipement multimédia (5) peut être joint au sein du réseau de communication (3) et une clé d'accès à l'équipement multimédia ;
* à partir de l'identifiant du terminal mobile (82) certifié par le réseau d'accès (2), le serveur distant (4) retrouve dans la table (45) l'adresse et la clé d'accès, se connecte à l'équipement multimédia (5) grâce à l'adresse et met en oeuvre un processus d'authentification basé sur la clé d'accès.

5. Procédé selon l'une quelconque des revendications 1 à 4, **caractérisé en ce que** ladite au moins une requête (91), transmise à l'équipement multimédia (5) par le serveur distant (4), appartient au groupe comprenant :
- une requête de fourniture d'une liste de contenus multimédias stockés par l'équipement multimédia (5) ;
- une requête de fourniture d'un contenu multimédia stocké par l'équipement multimédia (5) ;
- une requête de stockage d'un contenu multimédia par l'équipement multimédia (5) ;
- une requête de restitution d'un contenu multimédia par l'équipement multimédia (5) ;
- une requête d'arrêt de la restitution d'un contenu multimédia par l'équipement multimédia (5) ;
- une requête d'interruption temporaire de la restitution d'un contenu multimédia par l'équipement multimédia (5) ;
- une requête d'augmentation du volume sonore de la restitution d'un contenu multimédia par l'équipement multimédia (5) ;
- une requête de diminution du volume sonore de la restitution d'un contenu multimédia par l'équipement multimédia (5).

6. Procédé selon l'une quelconque des revendications 1 à 5, **caractérisé en ce que**, dans le cas où l'équipement multimédia (5) exécute une requête de fourniture d'un contenu multimédia, le procédé comprend en outre les étapes suivantes :
- le serveur distant (4) reçoit un contenu multimédia transmis par l'équipement multimédia (5) ;
- un serveur de streaming (44) compris dans le serveur distant (4) retransmet en continu, en mode « streaming », le contenu multimédia vers le terminal mobile (1).

7. Procédé selon l'une quelconque des revendications 1 à 6, **caractérisé en ce que** les échanges entre le terminal mobile (1) et le serveur distant (4) sont mis en oeuvre par un navigateur de pages (11), compris dans le terminal mobile (1), et un serveur de pages (41), compris dans le serveur distant (4).

8. Procédé selon l'une quelconque des revendications 1 à 7, **caractérisé en ce que** les échanges entre le serveur distant (4) et l'équipement multimédia (5) sont mis en oeuvre par un serveur applicatif (42), compris dans le serveur distant (4), et un module de traitement de requêtes et de transfert de données, compris dans l'équipement multimédia (5).

9. Produit programme d'ordinateur (953) téléchargeable depuis un réseau de communication (3) et/ou enregistré sur un support lisible par ordinateur et/ou exécutable par un processeur (951) **caractérisé en ce qu'**il comprend des instructions de code de programme pour l'exécution par un serveur distant (95) des étapes du procédé selon l'une quelconque des revendications 1 à 8 qui sont mises en oeuvre par le serveur distant, lesdites étapes comprenant :
- réception d'un terminal mobile (1), via un réseau de communication (3), au moins une demande de lancement d'une fonctionnalité sur un équipement multimédia (5) ;
- traduction de ladite au moins une demande du terminal mobile en au moins une requête et transmission (E8) ladite au moins une requête à l'équipement multimédia (5), via le réseau de communication (3), la requête étant une requête de fourniture d'un contenu multimédia ou de fourniture d'une liste de contenus multimédias ;
- suite à l'exécution d'une requête de fourniture d'un contenu multimédia ou une requête de fourniture d'une liste de contenus multimédias par l'équipement multimédia, réception d'un contenu multimédia ou d'une liste de contenus multimédias transmis par l'équipement multimédia et commande du stockage du contenu multimédia ou de la liste de contenus multimédias dans un espace de stockage réseau (43) couplé au serveur distant, de façon que le terminal mobile puisse ultérieurement demander au serveur distant de commander la lecture du contenu multimédia ou de la liste de contenus multimédias stocké dans l'espace de stockage réseau (43).

10. Produit programme d'ordinateur (923) téléchargeable depuis un réseau de communication (3) et/ou enregistré sur un support lisible par ordinateur et/ou exécutable par un processeur (921) **caractérisé en ce qu'**il comprend des instructions de code de programme pour l'exécution par un équipement multimédia (92) des étapes du procédé selon l'une quelconque des revendications 1 à 8 qui sont mises en oeuvre par l'équipement multimédia, lesdites étapes comprenant :
- réception d'un serveur distant selon la revendication 12 d'au moins une requête, via un réseau de communication (3), ladite requête correspondant à une traduction d'une demande de lancement d'une fonctionnalité sur l'équipement multimédia reçue par le serveur distant via le réseau de communication en provenance d'un terminal mobile, la requête étant une requête de fourniture d'un contenu multimédia ou de fourniture d'une liste de contenus multimédias ;
- exécution (E9) de ladite au moins une requête ;
- transmission au serveur distant d'un contenu multimédia ou d'une liste de contenus multimédias, le serveur commandant le stockage du contenu multimédia ou de la liste de contenus multimédias dans un espace de stockage réseau couplé au serveur , de façon que le terminal mobile puisse ultérieurement demander au serveur distant de commander la lecture du contenu multimédia ou de la liste de contenus multimédias stocké dans l'espace de stockage réseau.

11. Equipement multimédia (5) du type pouvant être connecté à un réseau de communication (3), **caractérisé en ce qu'**il comprend des moyens de réception et d'exécution d'au moins une requête transmise selon un protocole de communication « maître/esclave » par un serveur distant (4) selon la revendication 12, dit « maître », via le réseau de communication (3), ladite requête correspondant à la traduction d'une demande d'un terminal mobile (1) reçue par le serveur distant (4), via le réseau de communication (3), l'équipement multimédia comprend des moyens de transmission d'un contenu multimédia ou d'une liste de contenus multimédia vers le serveur distant à la suite de l'exécution de ladite au moins une requête, le serveur commandant le stockage du contenu multimédia ou de la liste de contenus multimédias dans un espace de stockage réseau couplé au serveur, de façon que le terminal mobile puisse ultérieurement demander au serveur distant de commander la lecture du contenu multimédia ou de la liste de contenus multimédias stocké dans l'espace de stockage réseau.

12. Serveur (4) du type pouvant communiquer avec un terminal mobile (1) et un équipement multimédia (5), via un réseau de communication (3), **caractérisé en ce qu'**il comprend :
- des moyens de réception d'au moins une demande de lancement d'une fonctionnalité sur l'équipement multimédia (5) transmise par le terminal mobile (1), via le réseau de communication (3) ;
- des premiers moyens de traduction de ladite au moins une demande du terminal mobile (1) en au moins une requête compréhensible par l'équipement multimédia (5), la requête étant une requête de fourniture d'un contenu multimédia ou de fourniture d'une liste de contenus multimédias ;
- des premiers moyens de transmission de ladite au moins une requête à l'équipement multimédia (5), via le réseau de communication (3),
- des moyens de réception d'un contenu multimédia ou d'une liste de contenus multimédias transmis par l'équipement multimédia,
- des moyens de commande de stockage du contenu multimédia ou de la liste de contenus multimédias dans un espace de stockage réseau couplé au serveur, de façon que le terminal mobile puisse ultérieurement demander au serveur de commander la lecture du contenu multimédia ou de la liste de contenus multimédias stocké dans l'espace de stockage réseau.

13. Serveur selon la revendication 12, **caractérisé en ce qu'**il comprend au moins l'un des moyens suivants :
- des moyens de stockage (43) de données multimédias transmises par l'équipement multimédia (5), via le réseau de communication (3);
- des seconds moyens de traduction desdites données multimédias de l'équipement multimédia (5) en des données multimédias transformées, se présentant sous une forme compréhensible par le terminal mobile (1);
- des seconds moyens de transmission des données multimédias transformées au terminal mobile (1), via le réseau de communication (3);
- des troisièmes moyens de transmission en continu, en mode « streaming », des données multimédias transformées au terminal mobile (1), via le réseau de communication (3).

## Patentansprüche

1. Kontrollverfahren einer Multimedia-Ausstattung (5) zur Wiedergabe und/oder Speicherung von Multimedia-Inhalten von einem mobilen Endgerät (1) aus, wobei das mobile Endgerät (1) und die Multimedia-Ausstattung (5) an ein Kommunikationsnetzwerk (3) angeschlossen sind, **dadurch gekennzeichnet, dass** das Verfahren die folgenden Schritte umfasst:
- das mobile Endgerät (1) sendet (E4) an einen entfernten Server (4) über das Kommunikationsnetzwerk (3) mindestens eine Startanforderung einer Funktionalität auf der Multimedia-Ausstattung (5);
- der entfernte Server (4) übersetzt (E7) die mindestens eine Anforderung des mobilen Endgeräts in mindestens eine Anfrage und überträgt (E8) die mindestens eine Anfrage an die Multimedia-Ausstattung (5) über das Kommunikationsnetzwerk (3), wobei die Anfrage eine Anfrage nach Bereitstellung eines Multimedia-Inhalts oder nach Bereitstellung einer Liste von Multimedia-Inhalten ist;
- die Multimedia-Ausstattung (5) empfängt und führt (E9) die mindestens eine Anfrage aus;
- der entfernte Server empfängt einen Multimedia-Inhalt oder eine Liste von Multimedia-Inhalten, die von der Multimedia-Ausstattung übertragen werden;
- der entfernte Server (4) steuert die Speicherung des Multimedia-Inhalts oder der Liste von Multimedia-Inhalten an einem Netzwerkspeicherplatz (43), der an den entfernten Server gekoppelt ist, so dass das mobile Endgerät später den entfernten Server auffordern kann, das Lesen des Multimedia-Inhalts oder der Liste von Multimedia-Inhalten, die an dem Netzwerkspeicherplatz (43) gespeichert sind, zu steuern.

2. Verfahren nach Anspruch 1, **dadurch gekennzeichnet, dass**, falls die Ausführung der mindestens einen Anfrage zu der Übertragung (E10) von Multimediadaten von der Ausstattung zum entfernten Server (4) führt, das Verfahren ferner die folgenden Schritte umfasst:
- der entfernte Server (4) übersetzt (E12) die von der Multimedia-Ausstattung (5) übertragenen Multimediadaten in umgeformte Multimediadaten, die in einer vom mobilen Endgerät (1) verständlichen Form vorhanden sind;
- der entfernte Server (4) überträgt (E13) die umgeformten Multimediadaten an das mobile Endgerät (1).

3. Verfahren nach Anspruch 2, **dadurch gekennzeichnet, dass** es ferner den folgenden Schritt (E11) umfasst: der entfernte Server (4) reichert die umgeformten Multimediadaten mit zusätzlichen Daten a, um an das mobile Endgerät (1) angereicherte Daten zu übertragen.

4. Verfahren nach einem der Ansprüche 1 bis 3, **dadurch gekennzeichnet, dass** es einsetzt:
- einen ersten Authentifikationsmechanismus, der es dem entfernten Server (4) ermöglicht, das mobile Endgerät (1) zu authentifizieren, und umfassend die folgenden Schritte:
* ein Zugangsnetzwerk (2), über das das mobile Endgerät (1) an das Kommunikationsnetzwerk (3) angeschlossen ist, zertifiziert einen Identifikator des mobilen Endgeräts (82);
* der entfernte Server (4) empfängt den Identifikator des zertifizierten mobilen Endgeräts (82) von dem Zugangsnetzwerk (2) ;
- einen zweiten Authentifikationsmechanismus, der es der Multimedia-Ausstattung (5) ermöglicht, den entfernten Server (4) zu authentifizieren, und umfassend die folgenden Schritte:
* der entfernte Server (4) unterhält eine Tabelle (45), die jedem Identifikator eines mobilen Endgeräts (82) einen Identifikator einer Multimedia-Ausstattung (5), eine Adresse des Kommunikationsnetzwerks (3) und einen Zugangsschlüssel zu der Multimedia-Ausstattung zuordnet;
* auf Basis des Identifikators des durch das Zugangsnetzwerk (2) zertifizierten mobilen Endgeräts (82) findet der entfernte Server (4) in der Tabelle (45) die Adresse und den Zugangsschlüssel, schließt sich an die Multimedia-Ausstattung (5) mit Hilfe der Adresse an und führt einen Authentifikationsvorgang basierend auf dem Zugangsschlüssel durch.

5. Verfahren nach einem der Ansprüche 1 bis 4, **dadurch gekennzeichnet, dass** die mindestens eine Anfrage (91), die an die Multimedia-Ausstattung (5) vom entfernten Server (4) übertragen wird, der Gruppe angehört, umfassend:
- eine Anfrage nach Bereitstellung einer Liste von Multimedia-Inhalten, die von der Multimedia-Ausstattung (5) gespeichert sind;
- eine Anfrage nach Bereitstellung eines Multimedia-Inhalts, der von der Multimedia-Ausstattung (5) gespeichert ist;
- eine Anfrage nach Speicherung eines Multimedia-Inhalts durch die Multimedia-Ausstattung (5);
- eine Anfrage nach Wiedergabe eines Multimedia-Inhalts durch die Multimedia-Ausstattung (5);
- eine Anfrage nach Einstellung der Wiedergabe eines Multimedia-Inhalts durch die Multimedia-Ausstattung (5);
- eine Anfrage nach vorübergehender Unterbrechung der Wiedergabe eines Multimedia-Inhalts durch die Multimedia-Ausstattung (5);
- eine Anfrage nach Erhöhung der Lautstärke der Widergabe eines Multimedia-Inhalts durch die Multimedia-Ausstattung (5);
- eine Anfrage nach Verminderung der Lautstärke der Wiedergabe eines Multimedia-Inhalts durch die Multimedia-Ausstattung (5).

6. Verfahren nach einem der Ansprüche 1 bis 5, **dadurch gekennzeichnet, dass**, falls die Multimedia-Ausstattung (5) eine Anfrage nach Bereitstellung eines Multimedia-Inhalts ausführt, das Verfahren ferner die folgenden Schritte umfasst:
- der entfernte Server (4) empfängt einen Multimedia-Inhalt, der von der Multimedia-Ausstattung (5) übertragen wird;
- ein Streaming-Server (44), der in dem entfernten Server (4) enthalten ist, überträgt kontinuierlich im "Streaming"-Modus, den Multimedia-Inhalt zum mobilen Endgerät (1) zurück.

7. Verfahren nach einem der Ansprüche 1 bis 6, **dadurch gekennzeichnet, dass** der jeweilige Austausch zwischen dem mobilen Endgerät (1) und dem entfernten Server (4) durch einen Seiten-Browser (11), der in dem mobilen Endgerät (1) enthalten ist, und einen Seiten-Server (41), der in dem entfernten Server (4) enthalten ist, durchgeführt wird.

8. Verfahren nach einem der Ansprüche 1 bis 7, **dadurch gekennzeichnet, dass** der jeweilige Austausch zwischen dem entfernten Server (4) und der Multimedia-Ausstattung (5) von einem Anwendungsserver (42), der in dem entfernten Server (4) enthalten ist, und einem Modul zur Bearbeitung von Anfragen und zum Datentransfer, das in der Multimedia-Ausstattung (5) enthalten ist, durchgeführt wird.

9. Computerprogrammprodukt (953), das von einem Kommunikationsnetzwerk (3) herunterladbar und/oder auf einem von einem Computer lesbaren Träger gespeichert und/oder von einem Prozessor (951) ausführbar ist, **dadurch gekennzeichnet, dass** es Programmcodeanweisungen für die Ausführung von einem entferten Server (95) der Schritte des Verfahrens nach einem der Ansprüche 1 bis 8, die vom entfernten Server ausgeführt werden, umfasst, wobei die Schritte umfassen:
- von einem mobilen Endgerät (1) über ein Kommunikationsnetzwerk (3) Empfang mindestens einer Startanforderung einer Funktionalität auf der Multimedia-Ausstattung (5);
- Übersetzung der mindestens einen Anforderung des mobilen Endgeräts in mindestens eine Anfrage und überträgt die mindestens eine Anfrage und Übertragung (E8) der mindestens einen Anfrage an die Multimedia-Ausstattung (5) über das Kommunikationsnetzwerk (3), wobei die Anfrage eine Anfrage nach Bereitstellung eines Multimedia-Inhalts oder nach Bereitstellung einer Liste von Multimedia-Inhalten ist;
- nach der Ausführung einer Anfrage nach Bereitstellung eines Multimedia-Inhalts oder einer Anfrage nach Bereitstellung einer Liste von Multimedia-Inhalten durch die Multimedia-Ausstattung, Empfang eines Multimedia-Inhalts oder einer List von Multimedia-Inhalten, die von der Multimedia-Ausstattung übertragen wurden und Steuerung der Speicherung des Multimedia-Inhalts oder der Liste von Multimedia-Inhalten an einem Netzwerkspeicherplatz (43), der an den entfernten Server gekoppelt ist, so dass das mobile Endgerät später den entfernten Server auffordern kann, das Lesen des Multimedia-Inhalts oder der Liste von Multimedia-Inhalten, die an dem Netzwerkspeicherplatz (43) gespeichert sind, zu steuern.

10. Computerprogrammprodukt (923), das von einem Kommunikationsnetzwerk (3) herunterladbar und/oder auf einem von einem Computer lesbaren Träger gespeichert und/oder von einem Prozessor (921) ausführbar ist, **dadurch gekennzeichnet, dass** es Programmcodeanweisungen für die Ausführung von einer Multimedia-Ausstattung (92) der Schritte des Verfahrens nach einem der Ansprüche 1 bis 8, die von der Multimedia-Ausstattung ausgeführt werden, wobei die Schritte umfassen:
- Empfang von einem entfernten Server nach Anspruch 12 mindestens einer Anfrage über ein Kommunikationsnetzwerk (3), wobei die anfrage einer Übersetzung einer Startanfrage einer Funktionalität auf der Multimedia-Ausstattung entspricht, die von dem entfernten Server über das Kommunikationsnetzwerk von einem mobilen Endgerät kommend empfangen wurde, wobei die Anfrage eine Anfrage nach Bereitstellung eines Multimedia-Inhalts oder nach Bereitstellung einer Liste von Multimedia-Inhalten ist;
- Ausführung (E9) der mindestens einen Anfrage;
- an den entfernten Server Übertragung eines Multimedia-Inhalts oder einer Liste von Multimedia-Inhalten, wobei der Server die Speicherung des Multimedia-Inhalts oder der Liste von Multimedia-Inhalten an einem Netzwerkspeicherplatz, der an den Server gekoppelt ist, steuert, so dass das mobile Endgerät später den entfernten Server auffordern kann, das Lesen des Multimedia-Inhalts oder der Liste von Multimedia-Inhalten, die an dem Netzwerkspeicherplatz gespeichert sind, zu steuern.

11. Multimedia-Ausstattung (5), die an ein Kommunikationsnetzwerk (3) angeschlossen werden kann, **dadurch gekennzeichnet, dass** sie Mittel für den Empfang und die Ausführung mindestens einer Anfrage umfasst, die nach einem Kommunikationsprotokoll "Master/Slave" von einem entfernten Server (4) nach Anspruch 12, "Master" genannt, über das Kommunikationsnetzwerk (3) übertragen wird, wobei die Anfrage der Übersetzung einer Anforderung eines mobilen Endgeräts (1) entspricht, die von dem entfernten Server (4) über das Kommunikationsnetzwerk (3) empfangen wird, wobei die Multimedia-Ausstattung Mittel zur Übertragung eines Multimedia-Inhalts oder einer Liste von Multimedia-Inhalten zu dem entfernten Server nach der Ausführung der mindestens einen Anfrage umfasst, wobei der Server die Speicherung des Multimedia-Inhalts oder der Liste von Multimedia-Inhalten an einem Netzwerkspeicherplatz, der an den Server gekoppelt ist, steuert, so dass das mobile Endgerät später den entfernten Server auffordern kann, das Lesen des Multimedia-Inhalts oder der Liste von Multimedia-Inhalten, die an dem Netzwerkspeicherplatz gespeichert sind, zu steuern.

12. Server (4), der mit einem mobilen Endgerät (1) und einer Multimedia-Ausstattung (5) über ein Kommunikationsnetzwerk (3) kommunizieren kann, **dadurch gekennzeichnet, dass** er umfasst:
- Mittel für den Empfang mindestens einer Startanforderung einer Funktionalität auf der Multimedia-Ausstattung (5), die von dem mobilen Endgerät (1) über das Kommunikationsnetzwerk (3) übertragen wird;
- erste Mittel zur Übersetzung der mindestens einen Anforderung des mobilen Endgeräts (1) in mindestens eine von der Multimedia-Ausstattung (5) verständliche Anfrage, wobei die Anfrage eine Anfrage nach Bereitstellung eines Multimedia-Inhalts oder nach Bereitstellung einer Liste von Multimedia-Inhalten ist;
- erste Mittel zur Übertragung der mindestens einen Anfrage an die Multimedia-Ausstattung (5) über das Kommunikationsnetzwerk (3),
- Mittel für den Empfang eines Multimedia-Inhalts oder einer Liste von Multimedia-Inhalten, die von der Multimedia-Ausstattung übertragen werden,
- Mittel zur Steuerung des Multimedia-Inhalts oder der Liste von Multimedia-Inhalten an einem Netzwerkspeicherplatz, der an den Server gekoppelt ist, steuert, so dass das mobile Endgerät später den entfernten Server auffordern kann, das Lesen des Multimedia-Inhalts oder der Liste von Multimedia-Inhalten, die an dem Netzwerkspeicherplatz gespeichert sind, zu steuern.

13. Server nach Anspruch 12, **dadurch gekennzeichnet, dass** er mindestens eines der folgenden Mittel umfasst:
- Mittel zur Speicherung (43) von Multimediadaten, die von der Multimedia-Ausstattung (5) über das Kommunikationsnetzwerk (3) übertragen werden;
- zweite Mittel zur Übersetzung der Multimediadaten der Multimedia-Ausstattung (5) in umgeformte Multimediadaten, die in einer von dem beweglichen Endgerät (1) verständlichen Form vorhanden sind;
- zweite Mittel zur Übertragung der umgeformten Multimediadaten an das mobile Endgerät (1) über das Kommunikationsnetzwerk (3);
- dritte Mittel zur kontinuierlichen Übertragung im "Streaming"-Modus der umgeformten Multimediadaten an das mobile Endgerät (1) über das Kommunikationsnetzwerk (3) .

## Claims

1. Method for controlling by a mobile terminal (1) a multimedia device (5) for the playing and/or storing of multimedia contents, the mobile terminal (1) and the multimedia device (5) being connected to a communication network (3), **characterized in that** the method comprises the following steps:
- the mobile terminal (1) sends (E4) to a remote server (4), via the communication network (3), at least one demand to launch a functionality on the multimedia device (5);
- the remote server (4) converts (E7) said at least one demand from the mobile terminal into at least one request and transmits (E8) said at least one request to the multimedia device (5), via the communication network (3), the request being a request to supply a multimedia content or to supply a list of multimedia contents;
- the multimedia device (5) receives and executes (E9) said at least one request;
- the remote server receives a multimedia content or a list of multimedia contents transmitted by the multimedia device;
- the remote server (4) controls the storage of the multimedia content or of the list of multimedia contents in a network storage space (43) coupled to the remote server, so that the mobile terminal can subsequently request the remote server to control the reading of the multimedia content or of the list of multimedia contents stored in the network storage space (43).

2. Method according to Claim 1, **characterized in that**, in the case where the execution of said at least one request results in the transmission (E10) of multimedia data from the device to the remote server (4), the method comprises moreover the following steps:
- the remote server (4) converts (E12) the multimedia data transmitted by the multimedia device (5) into converted multimedia data, being presented in a form that can be understood by the mobile terminal (1);
- the remote server (4) transmits (E13) the converted multimedia data to the mobile terminal (1).

3. Method according to Claim 2, **characterized in that** it comprises moreover the following step (E11) : the remote server (4) enriches the converted multimedia data with additional data, in order to transmit the enriched data to the module terminal (1).

4. Method according to any one of Claims 1 to 3, **characterized in that** it implements:
- a first authentication mechanism, allowing the remote server (4) to authenticate the mobile terminal (1) and comprising the following steps:
• an access network (2), through which the mobile terminal (1) is connected to the communication network (3), certifies an identifier of the mobile terminal (82);
• the remote server (4) receives the identifier of the mobile terminal (82) certified by the access network (2);
- a second authentication mechanism, allowing the multimedia device (5) to authenticate the remote server (4) and comprising the following steps:
• the remote server (4) holds a table (45) which associates with each mobile terminal identifier (82), an identifier of a multimedia device, an address at which the multimedia device (5) can be reached within the communication network (3) and a key for accessing the multimedia device;
• on the basis of the identifier of the mobile terminal (82) certified by the access network (2), the remote server (4) finds the address and the access key in the table (45), connects itself to the multimedia device (5) by means of the address and implements an authentication process based on the access key.

5. Method according to any one of Claims 1 to 4, **characterized in that** said at least one command (91), transmitted to the multimedia device (5) by the remote server (4), belongs to the group comprising:
- a request to provide a list of multimedia contents stored by the multimedia device (5);
- a request to provide a multimedia content stored by the multimedia device (5);
- a request to store a multimedia content by the multimedia device (5);
- a request to render a multimedia content by the multimedia device (5);
- a request to stop the rendering of a multimedia content by the multimedia device (5);
- a request to temporarily interrupt the rendering of a multimedia content by the multimedia device (5);
- a request to increase the sound volume of the rendering of a multimedia content by the multimedia device (5);
- a request to reduce the sound volume of the rendering of a multimedia content by the multimedia device (5).

6. Method according to any one of Claims 1 to 5, **characterized in that**, in the case where the multimedia device (5) is executing a request to supply a multimedia content, the method comprises moreover the following steps:
- the remote server (4) receives a multimedia content transmitted by the multimedia device (5);
- a streaming server (44) comprised within the remote server (4) continuously retransmits, in "streaming" mode, the multimedia content to the mobile terminal (1) .

7. Method according to any one of Claims 1 to 6, **characterized in that** the exchanges between the mobile terminal (1) and the remote server (4) are implemented by a page browser (11) comprised within the mobile terminal (1), and a page server (41) comprised within the remote server (4).

8. Method according to any one of Claims 1 to 7, **characterized in that** the exchanges between the remote server (4) and the multimedia device (5) are implemented by an application server (42), comprised within the remote server (4), and a request processing and data transfer module, comprised within the multimedia device (5).

9. Computer program product (953) downloadable from a communication network (3) and/or recorded on a medium that can be read by a computer and/or executed by a processor (951) **characterized in that** it comprises program code instructions for the execution by a remote server (95) of the steps of the method according to any one of Claims 1 to 8 which are implemented by the remote server, said steps comprising:
- reception from a mobile terminal (1), via a communication network (3), of at least one demand to launch a functionality on a multimedia device (5);
- conversion of said at least one demand from the mobile terminal into at least one request and transmission (E8) of said at least one request to the multimedia device (5), via the communication network (3), the request being a request to supply a multimedia content or to supply a list of multimedia contents;
- following the execution of a request for the supply of a multimedia content or a request for the supply of a list of multimedia contents by the multimedia device, reception of a multimedia content or of a list of multimedia contents transmitted by the multimedia device and control of the storage of the multimedia content or of the list of multimedia contents in a network storage space (43) coupled to the remote server, so that the mobile terminal can subsequently request the remote server to control the reading of the multimedia content or of the list of multimedia contents stored in the network storage space (43).

10. Computer program product (923) downloadable from a communication network (3) and/or recorded on a medium that can be read by a computer and/or that can be executed by a processor (921), **characterized in that** it comprises program code instructions for the execution by a multimedia device (92) of the steps of the method according to any one of Claims 1 to 8 which are implemented by the multimedia device, said steps comprising:
- reception from a remote server according to Claim 12 of at least one request, via a communication network (3), said request corresponding to a conversion of a request to launch a functionality on the multimedia device received by the remote server via the communication network coming from a mobile terminal, the request being a request to supply a multimedia content or to supply a list of multimedia contents;
- execution (E9) of said at least one request;
- transmission to the remote server of a multimedia content or of a list of multimedia contents, the server controlling the storage of the multimedia content or of the list of multimedia contents in a network storage space coupled to the server, so that the mobile terminal can subsequently request the remote server to command the reading of the multimedia content or of the list of multimedia contents stored in the network storage space.

11. Multimedia device (5) of the type which can be connected to a communication network (3), **characterized in that** it comprises means of reception and of execution of at least one request transmitted according to a "master/slave" protocol by a remote server (4) according to Claim 12, called "master", via the communication network (3), said request corresponding to the conversion of a request from a mobile terminal (1) received by the remote server (4), via the communication network (3), the multimedia device comprising means of transmission of a multimedia content or of a list of multimedia contents to the remote server following the execution of said at least one request, the server controlling the storage of the multimedia content of the list of multimedia contents in a network storage space coupled to the server, so that the mobile terminal can subsequently request the remote server to command the reading of the multimedia content or of the list of multimedia contents stored in the network storage space.

12. Server (4) of the type able to communicate with a mobile terminal (1) and a multimedia device (5), via a communication network (3), **characterized in that** it comprises:
- means of reception of at least one demand to launch a functionality on the multimedia device (5) transmitted by the mobile terminal (1), via the communication network (3);
- first means of conversion of said at least one demand from the mobile terminal (1) into at least one request that can be understood by the multimedia device (5), the request being a request to supply a multimedia content or to supply a list of multimedia contents;
- first means of transmission of said at least one request to the multimedia device (5), via the communication network (3),
- means of reception of a multimedia content or of a list of multimedia contents transmitted by the multimedia device,
- means of controlling the storage of the multimedia content or of the list of multimedia contents in a network storage space coupled to the server, so that the mobile terminal can subsequently request the server to control the reading of the multimedia content or of the list of multimedia contents stored in the network storage space.

13. Server according to Claim 12, **characterized in that** it comprises at least one of the following means:
- means of storage (43) of multimedia data transmitted by the multimedia device (5), via the communication network (3);
- second means of conversion of said multimedia data from the multimedia device (5) into converted multimedia data, being presented in a form that can be understood by the mobile terminal (1);
- second means of transmission of the converted multimedia data to the mobile terminal (1), via the communication network (3);
- third means of continuous transmission, in "streaming" mode, of the converted multimedia data to the mobile terminal (1), via the communication network (3) .
